Europäisches Patentamt

European Patent Office

Office européen des brevets

(19)

(11) Publication number: **0 151 131**
**B1**

# EUROPEAN PATENT SPECIFICATION

(12)

(45) Date of publication of patent specification: **03.01.90**

(21) Application number: **84902303.1**

(22) Date of filing: **25.05.84**

(86) International application number:
**PCT/US84/00811**

(87) International publication number:
**WO 84/04698 06.12.84 Gazette 84/28**

(51) Int. Cl.⁵: **B 01 D 35/18, H 05 B 6/02**

(54) SELF-REGULATING POROUS HEATER DEVICE.

(30) Priority: **26.05.83 US 498328**

(43) Date of publication of application:
**14.08.85 Bulletin 85/33**

(45) Publication of the grant of the patent:
**03.01.90 Bulletin 90/01**

(84) Designated Contracting States:
**AT BE CH DE FR GB LI NL SE**

(56) References cited:
| | |
|---|---|
| WO-A-82/03305 | US-A-3 463 319 |
| DE-A-2 011 555 | US-A-3 507 929 |
| DE-A-2 517 857 | US-A-3 629 551 |
| DE-A-2 621 736 | US-A-3 934 117 |
| DE-A-2 922 215 | US-A-3 966 786 |
| DE-B-1 125 692 | US-A-3 974 398 |
| GB-A- 981 219 | US-A-3 975 617 |
| JP-A-55 119 408 | US-A-4 015 546 |
| US-A-1 986 348 | US-A-4 019 021 |
| US-A-2 144 340 | US-A-4 055 125 |
| US-A-2 238 240 | US-A-4 256 945 |
| US-A-2 446 126 | US-A-4 456 186 |
| US-A-2 560 220 | US-A-4 459 126 |
| US-A-2 807 640 | |

(73) Proprietor: **METCAL INC.**
**3704 Haven Court**
**Menlo Park California 94025 (US)**

(72) Inventor: **DERBYSHIRE, Rodney, L.**
**398 Menlo Oaks Drive**
**Menlo Park, CA 94025 (US)**

(74) Representative: **Hayward, Denis Edward Peter et al**
**Lloyd Wise, Tregear & Co. Norman House**
**105-109 Strand**
**London WC2R 0AE (GB)**

Courier Press, Leamington Spa, England.

EP 0 151 131 B1

**Description**

This invention relates to self-regulating electrical heaters.

Various devices and methods have been suggested over the years for controlling the temperature of an electrical heater. Generally, such devices and methods have relied on positive temperature coefficient of resistance materials in some type of separate feedback network in which temperature variations detected by a sensor serve as input to a control system.

The major problem with techniques that rely on the positive temperature coefficient of resistance for a material is such that materials can control temperature over only a limited temperature range.

Prior techniques employing feedback networks have proved to be inappropriate in various applications—for example, in an environment where the response time is short, or where the heater must provide various amounts of heat along its cross-section, or where the addition of extra heating elements is not desired.

A heater that improves on such prior devices and methods has been proposed by Carter and Krumme in U.S. Patent No. 4,256,945. Referred to as an autoregulating electric heater, the Carter-Krumme heater does not employ separate sensors or feedback elements. Instead, the heater temperature—which is to be regulated—directly affects the amount of heat generated by the heater.

Specifically, Carter and Krumme disclose a laminate structure in which one layer comprises a material of high magnetic permeability and a second layer comprises a low resistance, non-magnetic material. The two layers have a common interface and are in thermal and electrical contact. Connected at opposite ends along the magnetic layer is an a.c. source. The magnetic layer and non-magnetic layer are in parallel across the source.

Because of the skin effect, the application of alternating current to the magnetic layer initially results in a current path substantially confined to a depth in the magnetic layer extending inward from the surface adjacent the current return path of the circuit; i.e. opposite the interface of the low resistance layer. The depth of penetration of the current is defined by the well-known Steinmetz expression:

$$\text{skin depth} = \text{constant } \sqrt{\rho/\mu f}$$

where $\rho$ is the resistivity and $\mu$ is the magnetic permeability of the magnetic material and where f is the frequency of the current. Because the field falls off exponentially in accordance with the expression $e^{-x}$ where x=thickness/skin depth, it should be realized that approximately 63.2% of the current flows in one skin depth.

As is well known, resistance to current is proportional to $\rho/A$ where "A" is the cross-section through which current flows. Accordingly, if the skin depth is increased, the cross-sction A increases and the resistance correspondingly decreases. Where the Joule heat generated by a material is equal to $I^2R$, it is noted that by increasing skin depth the area A increases; the resistance decreases; and thus the heat generated decreases.

Carter and Krumme in the above-referenced patent have coupled this relation of depth versus generated heat with their awareness of magnetic materials which have permeabilities which, at least over a range of temperatures, increase with decreasing temperatures. In particular, certain magnetic materials provide a large increase in permeability with a small decrease in temperature between two predefined temperatures (one of which may be referred to as the Curie temperature). When these certain materials undergo this small decrease in temperature, the value of the permeability greatly increases and, all other factors being equal, the depth of penetration of a major portion of the a.c. current in the material decreases. This depth of penetration is not necessarily the skin depth. Rather this depth of penetration may reflect the depth at which 95% (or some other percentage) rather than the theoretical 63.2% of the current flows. This selectable depth is inversely related to permeability, increasing with decreasing permeability. Moreover, the resistance increases resulting in an increased $I^2R$ generation of heat for a constant current passing through a device.

By combining these various effects and material properties, as discussed above, a first measure of self-regulation (or autoregulation) is achieved. That is, within the magnetic material itself, the heat generated thereby is affected by the depth of current penetration and the depth of current penetration has been shown to depend on the temperature of the magnetic material.

As taught by Carter and Krumme, a second measure of self-regulation is also achieved as the current totally penetrates the magnetic layer and follows a path that also includes the "parallel" low resistance layer. When this occurs, it is as if a constant current passes through a high resistance and a low resistance in parallel rather than through just a high resistance.

This change in resistance translates into a sharp variation in generated heat. With a constant current of $I, I^2 = K$ (where K is a constant). When the current flows only through the magnetic layer of high resistance $R_1$, the corresponding value for generated heat is $KR_1$. When the current flows through along the layer of low resistance $R_2$ (where $R_2 \ll R_1$), the generated heat is approximately $KR_2$. The generated heat $KR_2$ is significantly lower that the heat $KR_1$. Accordingly, it is noted that as the depth of the current into the magnetic layer increases, the resistance and, hence, the generated heat decreases. In addition, as the

2

current penetrates the low resistance layer, resistance drops even more drastically to further decrease the generated heat.

By employing the two layer laminate structure, Carter and Krumme achieved a highly effective auto-regulating or self-regulating heater useful in various applications, such as soldering ions.

In addition to the teaching of U.S. Patent No. 4,256,945, related inventions have been set forth in copending patent applications. Such inventions have pertained, inter alia, to features including: (a) the prevention of high frequency fields generated in the heater from being radiated into regions adjacent to the heater, EP—A—0075010; (b) the generation of auto-regulated heat with a relatively low constant current source, EP—A—0107927; (c) the formation of a laminar structure of two high magnetic permeability layers one of which has a higher Curie point than the other, EP—A—0107927; (d) the use of an auto-regulating heater in raising the temperature of a fusible material to a condition of molten flow, EP—A—0127680; and (e) the formation of a laminate structure in which a low resistance layer is interposed between two magnetic layers having differing Curie temperatures, EP—A—0110692.

The advantages in the heating art achieved by the various inventions described in the aforementioned patent specifications and relating to auto-regulation have been useful and significant in numerous fields of application and environments. The present invention expands the utility of these prior art advances into new applications and new environments as well as providing new features and useful articles.

The present invention seeks to provide an auto-regulating heater for use primarily in the heating of fluids.

According to the present invention, an auto-regulating electrical heater for regulating the temperature of a fluid comprises a single layer or a plurality of contiguous layers,

the single layer or at least one of the contiguous layers being a thermally conductive layer of comparatively high electrical resistance but nevertheless a.c. conducting magnetic material, the permeability of which is inversely related to its temperature over a given temperature range, and being provided with electrical terminals for passage through it of an a.c. current the depth of penetration of which current into said layer is dependent on its permeability and hence its temperature;

characterised in that at least said thermally conductive layer of magnetic material or a layer contiguous therewith is porous and adapted to have at least a portion of a fluid to be heated located in its pores.

As a porous, self-regulating heater, the present invention has various advantages achieved in the above-mentioned auto-regulating heaters. For example, the invention does not require additional, often elaborate sensors and control systems. Also, various areas along the heater can provide different levels of generated heat in response to the temperature of the heater at each such area. The generating of heat can thus be localised to effect either a uniform or a predefined variation or gradient of temperatures along the heater.

In addition, however, the present invention features uses and advantages which underscore the significance and synergistic nature of porous self-regulating heater devices of the present invention.

First, the heater of the invention can serve as a filter as well as a heater. By applying a pressure differential across the porous heater, fluid and contaminants entrained therein can be directed toward the pores. The contaminants can then be trapped and the fluid allowed to pass through. The invention, in such an embodiment, may be used to purify liquids by both filtering and heating at the same time.

A second and perhaps more notable application of such a device is in a diesel fuel line. When attempting to cold start a diesel engine, a build-up of paraffin, particularly in a fuel filter, may often prevent the flow of fuel and the starting of the engine. The present invention can alleviate such a problem. When energized, the filter-heater will generate heat, the amount of heat being related to the temperature of the heater device at each given area. Cold or solidified paraffin resting against the filter-heater is then heated in the normal operation of the filter-heater, which results in melting the paraffin. Because the heat tends to concentrate on the cold spots, the device of course realizes thermal efficiency by directing heat where it is most needed. If the heat of normal operation is insufficient, means for internally generating greater levels of heat in the device in order to melt or burn-off paraffin or contaminants may be provided by increasing frequency or current density. The significance of this invention in a fuel line for aircraft is particularly noteworthy since such a fuel line may undergo severe temperature decreases as the aircraft increases its elevation. The clogging of a fuel filter screen with ice crystals is a long known, serious problem which can be substantially alleviated by the present filter-heater.

A third context in which a multiple temperature heater-filter may be used is an oceanography. Where sea water is to be collected and/or heated as it passes through a filter, a filter may become clogged with biofouling. By heating the filter beyond a normally regulated temperature to a biocidal level, marine growth may be vaporized or burned off so that the filter can resume normal operation.

Additional uses contemplated by the invention include the purification of used motor oil and polymer stripping. It is further contemplated that a porous heater be used in separating, for example, low molecular weight amorphous polypropylene from a polypropylene polymer, amorphous polypropylene having a lower melt transition than isotactic polypropylene.

The devices of this invention can be used as porous heaters through which fluids flow; porous heaters which filter contaminants from a fluid as it flows through the device; porous heaters which can be fabricated to regulate fluids at several temperatures; porous heaters which heat local areas to effect either a desired uniform or a variable temperature profile across a fluid; porous heaters that can be switched between at least two temperatures, the higher of which is sufficient to remove contaminants which may be trapped at the pores; or other such porous heaters and combinations thereof which feature autoregulation, or self-regulation.

The preferred device that achieves these various ends includes at least one thermally conductive layer of a porous magnetic material that has a defined magnetic permeability (µ) versus temperature (T) response wherein, at least over a given temperature range, µ increases as T decreases. The µ versus T response is a function of the magnetic material employed and the magnetic field to which the layer is exposed. That is to say that over a predefined temperature range, the variation in µ may also be considerably affected by changing the magnetic field. It is preferred that the change of permeability over the predefined temperature range be large in order to enhance the regulation of temperature.

In the absence of fluid the device autoregulates at a prescribed temperature. As fluid comes in contact with such a magnetic layer, the fluid comes in thermal equilibrium with the surface of the layer where contact is made. That area of contact decreases in temperature in response to fluid temperature below the autoregulating temperature and (assuming the temperature variation is within the given range) the value of µ will increase. As µ increases, the skin depth, which represents the depth of current penetration, decreases, resulting in a decrease in current cross-section and an increase in resistance. When a constant a.c. current is applied across two spaced points on the magnetic layer, the decrease in temperature which leads to an increase in resistance results in an appreciable increase in heat generation. That is, the devices of this invention generate more heat when in contact with lower temperature fluids than with higher temperature fluids over the self-regulating temperature range of the heater. Accordingly, this simplest form of the invention permits a fluid to be heated by a heater in an authothermic, self-regulating manner as the fluid passes through it.

By adding another layer to form a laminate structure, the characteristics of the invention are further enhanced. If the added layer has a low resistance, a sharp or well defined cut off temperature can be provided, above which considerably less heat energy is transferred to the fluid. In such an embodiment, current is normally and substantially confined to the skin depth or some other defined depth of penetration of current in the magnetic layer. When the thermal equilibrium induced in the magnetic layer is high, the permeability µ is correspondingly low, resulting in a large depth of penetration. If the depth of penetration becomes larger than the thickness of the magnetic layer, substantial current then also passes through the low resistance, added layer. Once current flow enters this added layer, the heat generated is drastically reduced. That is, where the "parallel" resistance of the added layer is relatively small, $I^2R$ heat is greatly diminished. Hence, at and above the temperature at which the depth of penetration exceeds the thickness of the magnetic layer, comparatively little heat is generated. In this embodiment, the heater assures that the temperature of the fluid (at least over a given range) is raised to at least a predefined minimum level.

A third alternative embodiment or device includes at least two magnetic layers that form a laminate structure, each layer having different µ versus T response. In this embodiment, different fluid temperatures produce different relative responses. Within a single layer, it is recalled, the change in skin depth with respect to temperature depends on changes mainly in µ (the resistivity of the single layer remaining substantially relatively constant). In this laminate device, when any a.c. current penetrates the first layer and enters a second layer, however, the permeability and resistivity of the second layer also affect the heat generated. If the second layer has the same resistivity and a higher permeability than the first layer at a specific temperature, the depth of this added current penetration into the second layer is smaller than if the current was to penetrate further into material of the first layer. A gradient in the heat generation profile thus results as the current penetrates the second layer. If the second layer differs in resistivity as well, the heat generation profile may also exhibit a calculable—although more complicated—gradient. Moreover, by stacking more than two magnetic layers to form a laminate structure, various heat generation gradients may result corresponding to determined temperature ranges.

A fourth embodiment of the heater which can also vary the heat generation response includes at least one magnetic layer having a thickness, resistivity, or magnetic permeability that varies at different areas within the device. In this embodiment, it is envisioned that the thickness of the magnetic layer may gradually increase from one end of the magnetic layer toward the other. The effect of this change in thickness is readily noted if a low resistance layer of uniform thickness is laminated to one surface of the magnetic layer and a constant a.c. current applied to the magnetic layer. The temperature required for the current to penetrate the magnetic layer and to substantially cut off heat generation thus varies from one end of the magnetic layer to the other. This embodiment can serve to permit a fluid to pass through the device while effecting a progressive thermal gradient across the fluid cross-section.

The heating devices of this invention may comprise flat, cylindrical, conical or other such structural configurations comprising at least one porous layer or a plurality of laminated, porous layers. Accordingly, the invention may be shaped for use as a fuel filter-heater, or a hot air gun to precisely heat a given flow rate of gas, or a chemical reaction chamber in which reactants and flow rate can be precisely controlled as to temperature, or a fractionation or stripping column for polymers.

In addition, since the heater itself is an integral structure, removal and replacement from a support structure can be simplified.

A further mode of this invention contemplates the heating of a fluid that is electrically conductive, wherein such fluid passes through at least one porous layer of thermally conductive material encircled by a

4

non-porous magnetic, thermally conductive layer. An a.c. current is supplied so that it follows a path about the outer surface of the encircling magnetic layer. When the encircling magnetic layer is below a given temperature, the current is confined to a narrow depth and significant heat is directed to the fluid passing through the porous inner layer or layers. When the encircling layer exceeds the given temperature, the a.c. current spreads inwardly. When the current reaches the conductive fluid, the resistance and the related $I^2R$ heat drop. Thermal control is thereby achieved. In addition, it is noted that the magnetic layer may be encircled, rather than encircle, the porous layer. That is, a.c. current may then move outwardly from the inner surface of an encircled magnetic layer until it reaches the conductive fluid, whereat the generation of heat drops. The employment of either or both an encircling and an encircled magnetic layer may be provided.

In considering these various embodiments, it is noted that there may be limiting factors such as (a) materials and temperature ranges which must be used; (b) contaminants which do not vaporize or burn off in the heater-filter embodiments; (c) flow rate limits (although the invention may be designed to regulate the fluid temperature over a wide range of flow rates); and (d) the thermal conductivity of different layers and fluids. In practicing the various embodiments and realizing the sundry advantages and benefits of this invention, these factors should be considered.

In any case, regardless of the embodiment, it is preferred that the maximum heat obtained at a minimum power, or maximum $I^2R$ heat, be transferred to a fluid. Specifically, it is preferred that the heater device provide several times more heat to the fluid when cold and thus requiring maximum heating rather than to attempt to heat a fluid above a desired level at which little or no heat is required. Proper selection of the material of construction of the heating device can achieve this end.

One significant application for the heating devices of this invention is in the area of chemical reaction chambers.

In a number of chemical reactions, tight and strict control of the variables in the equation $PV=nRT$ is of significance. Specifically, in the disciplines of polymer synthesis, of organic and inorganic chemistry, and of biochemistry, there are reactions in which temperature (as well as other variables) must be closely controlled. By proper selection of chamber dimensions and flow rates, together with the employment of heating devices taught herein, exquisite and explicit control of reaction conditions can be attained.

Controlled reaction chambers are used in industrial applications. Reactions such as large-scale polymerization may be practiced simply and economically when both polymer molecular weight and molecular weight distribution can be controlled and reaction yields maximized. Such polymerization reactions include, but are not limited to, free radical initiated, chain propagation reaction polymerization and stepwise condensation reaction polymerization. By way of example, polymer classes formed by the former type of polymerization include: 1-polyolefins, polyvinyl halides, polyaromatics, polyalkyl methacrylates, polyacrylonitrile, and the like. Examples of the latter type of polymerization include: polyepoxy resins, phenol-formaldehyde resins, polyamides, polyesters, Urea-formaldehyde resins, etc. Silicone polymers represent yet another example of a material that may be manufactured using the heating devices of this invention. Furthermore, controlled co-polymerization, alternating co-polymerization, block co-polymerization and polymer grafting may employ these porous heating devices.

Large-scale industrial applications obviously would involve the use of large reaction units and large heaters; however, the present invention may be employed on smaller scales as well. Such smaller units would find use in organic and in biochemical synthesis.

Reaction chambers made using heaters of this invention can feature multiple zones of tightly controlled temperature, as well as pressure, volume, and concentration control. As a result, most any endothermic or exothermic reaction may be carried out resulting in nearly complete reactions and consequently excellent yields by merely selecting optimal reaction conditions.

One or more reaction heating zones may be employed in a serial manner in order to sustain biochemical synthesis. Specific amino acid chains, proteins, polysachamides, nucleic acid chains, and the like may be produced by arranging the heating zones (or portions thereof) serially with sequential feedstock inputs.

In a preferred embodiment, a reaction chamber would include a heater device that extends entirely along the path length of flow through the chamber. By forming the heater device either as (a) a single layer of alloy having varied permeability versus temperature response along the direction of flow or as (b) a plurality of stacked layers, different levels of heat may be imparted at various locations along the length of the chamber. For example, two reactions A and B may be combined at a first location along the chamber with a heater device raising both reactants to a temperature $T_I$ as they combine to form a mixture M. As mixture M flows through the chamber, it may be raised in temperature by the single or multiple layers of the heater device. At a second location along the chamber at which the mixture M reaches a temperature $T_{II}$, a third reactant C may be entered to combine with the mixture M. This serial combining or mixing may be necessary since reactant C must be kept at a temperature above $T_I$ or since reactants A and B may combine optimally at $T_I$, with their resultant mixture M combining optimally with reactant C at temperature $T_{II}$ to promote a chemical reaction. Thus reaction chambers based on heating devices of this invention permit tightly controlled temperature regulation of fluids therein before, during and after a reaction occurs. The term "fluid", it is noted, includes liquids, gases, mixtures, suspensions, powders, and generally any substance that will flow under sufficient heat and pressure.

To enhance the temperature control and safety aspects of such reactions chambers, zones of cooling—preferably constant cooling—can also be provided. The cooling zone  if needed or desired, extracts heat from the chamber along at least part of the chamber length. Together with the heater devices, cooling zones permit even tighter thermal control over a reaction than can be achieved with more traditional methods.

The pairing of a cooling zone and a heater device may be needed when an exothermic reaction is to be considered. The heater device may raise the temperature of reactant E to $T_{III}$ and then combine E with a reactant F already at temperature $T_{III}$ to yield product N plus heat. Where the heat generated is of an excessive level, two effects occur to reduce the heat level. First, the heater itself automatically—by self-regulation—curtails the heat transferred to a minimal level. Second, the cooling zone withdraws heat from the reaction stream. In addition, the cooling zone can withdraw sufficient heat to prevent serious overheating. If necessary, a catalyst coating can be provided within the interior of the chamber to promote a desired reaction.

Various embodiments of the invention will now be described by way of example and with reference to the accompanying drawings, in which:—

Figure I is a slide-view illustration showing one embodiment of a self-regulating fluid heating device comprising a single porous layer of magnetic material.

Figure II(a) is a side-view illustration showing another embodiment of a self-regulating fluid heating device comprising two porous layers, one being magnetic and one being low resistance and nonmagnetic. Figure II(b) illustrates the sharp break in heat generated versus depth of current penetration attainable with such a two layer heating device.

Figure III is a side-view illustration showing another embodiment of a self-regulating fluid heating device comprising three porous layers, namely one low resistance nonmagnetic layer sandwiched between two magnetic layers.

Figure IV is a side-view illustration showing another embodiment of a self-regulating fluid heating device comprising at least two magnetic layers of conical shape.

Figure V illustrates the dependence of permeability, $\mu$, on temperature, T, for different materials.

Figure VI is top-front perspective of a tubular embodiment of a heating device of this invention.

Figure VII is a cutaway view of a heater-filter made according to this invention, used in a fuel line environment.

Figure VIII is a side-view illustration of another embodiment of a self-regulating fluid heating device having a magnetic layer with a conductive fluid forming a low resistance "layer" against it.

Figure IX is a front-top perspective of a cylindrical dual-temperature heating device.

Figure X is a cutaway view of one embodiment of a reaction chamber with a self-regulating heater zone within it.

Figure XI is a cutaway view of another embodiment of a reaction chamber with a self-regulating heater within it.

Figure XII is an illustration of an embodiment of a reaction chamber having self-regulating heating and controlled presence and volume.

Referring to Figure I, a heater device 100 is shown comprising of a single layer 102 which is made of a porous, thermally conductive material having a magnetic permeability which, over a given temperature range, decreases with increasing temperature. Such a material preferably has a relatively high effective permeability ($\mu \geq 200$) below a first given temperature ($T_1$) and a permeability of approximately one ($\mu \cong 1$) above a second higher given temperature ($T_2$), where $T_2 > T_1$. As the temperature of the layer 102 drops in the range between the second temperature ($T_2$) and the first temperature ($T_1$), the permeability increases. When the material of construction of layer 102 is selected such that its resistivity does not undergo any appreciable change over the given temperature range ($T_2 - T_1$), a change in permeability results in a change in skin depth. This fact is readily recognized when one notes the definition of skin depth (S.D.);

$$S.D. = 5030\sqrt{\rho/\mu f}\,cm. \qquad (1)$$

where $\rho$ and $\mu$ are the resistivity and permeability of a material through which an a.c. current at the frequency f passes. With the frequency f and the resistivity $\rho$ maintained constant, the skin depth becomes solely dependent on changes in the permeability of the material. More specifically, under these conditions:

$$S.D. \; \alpha \; 1/\sqrt{\mu} \qquad (2)$$

Accordingly, as temperatures increase (within the given range), permeability $\mu$ decreases and the skin depth increases.

Because the current density falls off at a rate equal to $e^{(-t/S.D.)}$, where t is the thickness being considered, it is noted that all but $(1-1/e) \times 100\%$ of the current is theoretically confined to a skin depth. In this description, the term "depth of penetration" of the current is used to represent that thickness beyond which no substantial current flows. This depth of penetration may equal one skin depth or some other thickness at which a predefined theoretical percentage of current flows. When the depth of penetration is the skin depth, expression (1) applies. Where the depth of penetration is other than skin depth, expression (1) would require some minor modification although the general principles would remain the same.

This change in the depth of penetration beyond which no significant current passes takes on special meaning when a.c. current is, in fact, applied to the layer 102 by a source 104 connected to two points 106 and 108. The contact points 106 and 108, it is noted, may be located on either surface of the layer 102 with a similar effect being achieved.

As shown in Figure I, a fluid 110 flows against the layer 102. The temperature of the fluid 110 varies at different areas along the layer. Along one area on the surface 111 of the layer 102, the temperature of the fluid 110 is $T_A$; at another area the temperature of the fluid 110 is $T_B$; and at a third area the temperature of the fluid 110 is $T_C$. The temperature $T_B$ is lower than temperature $T_A$ which, in turn, is lower than temperature $T_C$, i.e. $T_B < T_A < T_C$. Because the resistivity $\rho$ of the layer is considered constant and the frequency f of the a.c. current is held constant, the depth of penetration of the current, represented by the shaded portion 112, varies with the temperature-induced changes in permeability of the material as reflected in the permeability $\mu$ versus temperature response curve for the given magnetic material. That is, where the fluid 100 induces the low temperature $T_B$ in the layer 102, the permeability remains high and the depth of penetration remains low. Similarly, where the higher temperature $T_A$ is induced in a different area of the layer 102, the permeability is correspondingly less and the depth of penetration is greater. At the highest temperature $T_C$, the permeability is even lower and the depth of current penetration even greater.

These variations of the depth of current penetration with variations in the fluid temperature represents one basic aspect of a self-regulating heater. In this regard, it is recognized that the resistance (R) to a current (I) is a function of the cross-sectional area (A) through which the current flow is confined. Specifically, resistance is inversely proportional to A. The cross-sectional area A is approximately equal to the width (transverse to current flow) multiplied by the depth of penetration. Hence, as shown by the following expressions, a decrease (increase) in depth of penetration causes a decrease (increase) in area A, which results in increased (decreased) resistance. For a current I of constant frequency, the value of $I^2R$—Joule heat—transferred by the layer 102 to the fluid is greater where the fluid temperature is low and less where the fluid temperature is high.

In Figure I, resistance R is large where the temperature $T_B$ is low and the depth of current penetration is small. At this area, the Joule heat provided to the fluid 110 is relatively large. On the other hand, where the temperature is high at $T_C$, the depth of current penetration is great, the resistance is relatively low, and the Joule heat generated and transferred to the fluid 110 is relatively low.

Accordingly, with reference to Figure I, it is observed that the heating can be localized within layer 102 to provide heat as required to raise the temperature at cold spots while providing little heat where it is not required.

Finally, with regard to Figure I, it is noted that the layer 102 is porous. The pores 116 permit the fluid 110 to flow through the layer 102. This aspect is significant not in providing a flow-through heater that is self-regulating; but by properly dimensioning the pores 116, contaminants entrained in the fluid 110 can be entrapped. The heater device 100 thereby also serves as a filter.

The same layer 102 thus (a) senses the fluid temperature, (b) automatically provides heat to the fluid 110 in accordance with where it is needed, and (c) filters the fluid 110 as it flows through the layer 102 if so desired.

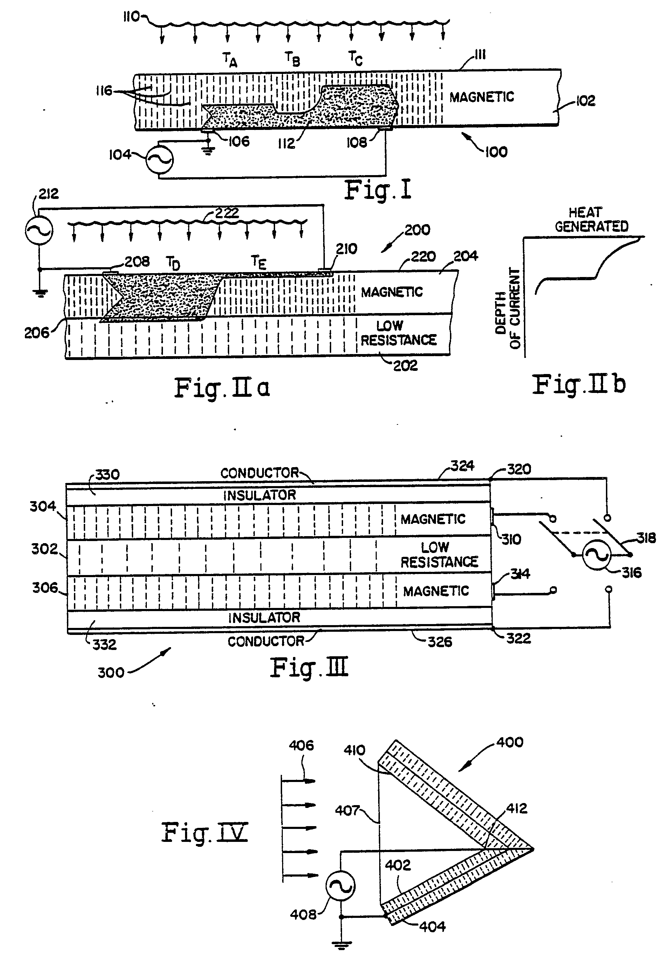

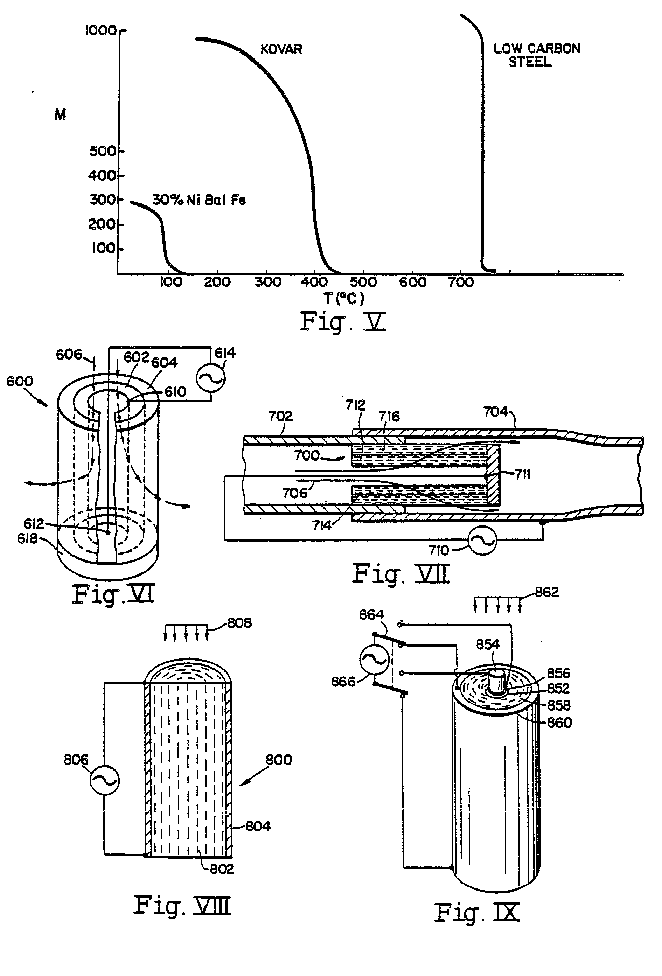

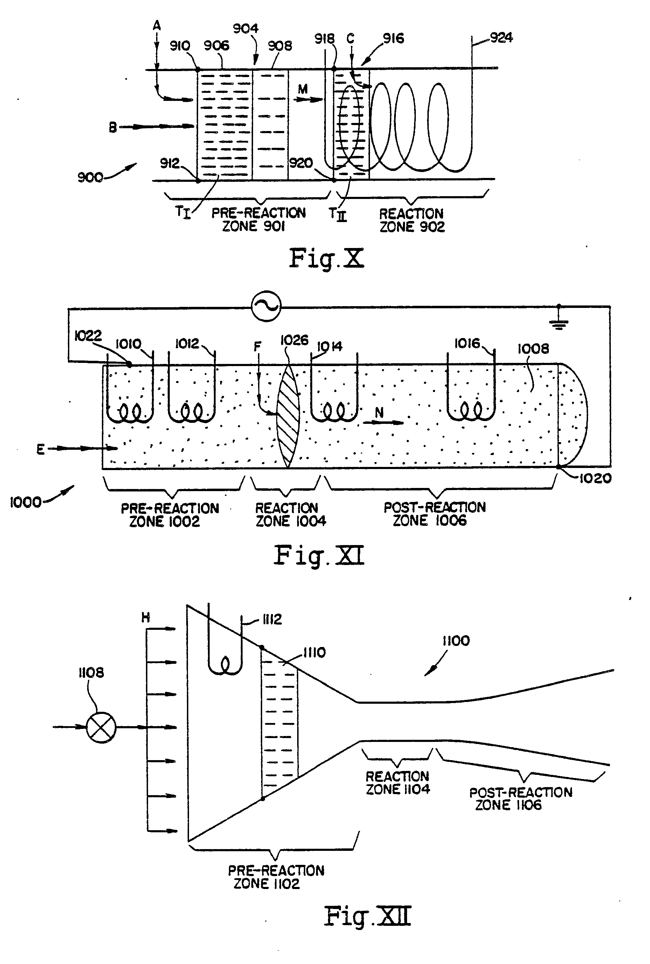

In the Figure I embodiment, it is noted that the return path is located opposite the surface 111 which first comes in contact with the fluid 110. Alternatively, the return path in this single layer embodiment may be positioned on the same side of the layer 102 as the fluid 110 itself. According to this alternative embodiment, the surface 111 closest to the fluid 110 is directly heated with portions away from the surface 111 being heated by conduction and to a lesser degree. Hence, although both techniques achieve the desired heating, this latter embodiment is more efficient.

It should be recognized that the principles underlying the operation of the device in Figure I also apply, for the most part, to the subsequent embodiments which are discussed below. In this regard, however, it will be noted that the location of the ground return path is generally not optional as in the Figure I device.

Turning now to Figure II(a), a two layer embodiment of a heater device 200 according to this invention is shown. The first layer 202 is made of a low resistance, preferably porous, material. The second layer 204 is porous, thermally conductive, and magnetic. That is, the second layer 204 has a relatively high permeability below a first given temperature $(T_1)$, and a permeability of approximately one above a second given temperature $(T_2$, where $T_2 > T_1)$. (The second given temperature may be referred to as the Curie point). As discussed relative to Figure I, the material of layer 204 has a permeability which is inversely related to temperature between the first $(T_1)$ and second $(T_2)$ given temperatures. The material of layer 204 is also of high resistivity relative to layer 202. The thickness of the high resistivity layer 204 is preferably on the order of one to two skin depths. Layer 202 is laminated to layer 204 to form an interface 206 between them. The layers 202 and 204 are thereby in physical as well as electrical contact.

Connected at two points 208 and 210 on surface 220 of the layer 204 are leads from a source 212, which applies an a.c. current. The current follows a path the depth of which is measured from the surface 220 of the layer 204; that is the surface opposite the interface 206. When the temperature of a fluid 222 is at relatively low $(T_E)$, the depth of penetration of the current is small. However, when the temperature of the fluid 222 is at a high $T_D$, the depth of penetration is large $(T_D \gg T_E)$. In fact, the current totally penetrates the

EP 0 151 131 B1

magnetic layer 204 and enters the low resistance layer 202. Along this portion of the current path, the two layers appear to be electrically in parallel. Because the layer 202 has low resistance, the parallel combination also has low resistance. The Joule heat generated (where $I^2$ is constant) thus almost completely drops off because of this severe change in resistance. Hence, where the temperature of the fluid 222 is $T_E$, much Joule heat is generated, whereas little heat is generated where the temperature of the fluid 222 is $T_D$.

In the Figure II embodiment, two effects contribute to self-regulation. First, as in Figure I, an increased depth of penetration of current into the layer 204 from surface 220 results in decreased resistance and Joule heat. In addition, however, when the current enters layer 202, the resistance drops drastically resulting in a corresponding drop in heat generation. This dual effect is depicted in Figure II(b) which graphically shows how the generated heat (a) is at a maximum where the depth of current penetration is the least; (b) gradually decreases as the depth of penetration increases; and (c) drops to a minimum when the current enters the low resistivity layer 202. The graph, Figure II(b), is provided to show general relationships and is not intended to set forth precise, quantitative relationship between the heat generated and the depth of current penetration.

In this regard, the thickness of the layer 204 is defined so that at a preferred temperature $T_1$, e.g. the Curie point for the material of composition of layer 204, the current totally penetrates layer 204 and enters layer 202. That is, at the temperature $T_1$, the depth of penetration exceeds the thickness of the layer 204. Layer 204 is preferably one or several skin depths thick and may be defined as desired.

As with the Figure I embodiment, the heater device 200 can also function as a filter as well as a self-regulating, flow-through heater. To achieve filtration, the pores in layer 202 or layer 204 or both may be small enough to trap contaminants entrained in the fluid 222. Currently, there are sintered bronze and other porous metal filters. Such filters may comprise the low resistance layer 202 and may be laminated to a magnetic layer 204. The layer 202 in such case would already have an appropriate porosity for a given end use. The magnetic layer 204 should have pores that are preferably greater than or equal to the size of the pores in the layer 202 since contaminated and cool fluid would first come in contact with layer 204.

Whether used in a heater-filter application or not, there may be a problem with particles clogging the pores of the heating devices 100 or 200. To address this problem this invention further contemplates a multi-level heating feature in which a device can be operated at any of several selectable, self-regulating temperatures.

A dual-level heating device 300 is shown in Figure III. The device 300 has a laminate structure which permits the device 300 to effect heating at two different levels. Specifically a low resistance, thermally conductive layer 302 is sandwiched between two magnetic layers 304 and 306. Coupled to each magnetic layer 304 and 306 is a respective contact 310 and 314. Either contact 310 or 314 is selectively connected to one terminal of a two-terminal source of current 316 by the action of a switch 318. The switch 318 also selectively connects the other terminal of the source 316 to a contact 320 or 322. Contact 320 is connected to an electrical conductor layer 324; contact 322 is connected to an electrical conductor layer 326. Sandwiched between the conductor layer 324 and the magnetic layer 304, is an electrical insulator layer 330. Similarly, sandwiched between the conductor layer 326 and the magnetic layer 306 is an electrical insulator layer 332. The switch 318 in a first (up) position creates a current path through contact 310, magnetic layer 304, insulator layer 330, conductor layer 324, and contact 320. In this switch position current penetrates a thin depth of the magnetic layer 304 proximate the interface with the insulator layer 330 when the temperature of the magnetic layer 304 is low. When the temperature is high, the depth of penetration increases, eventually reaching the low resistance layer 302 which results in a substantial cut-off of heating. Moving the switch 318 to a second (down) position creates an alternate current path through contact 314; layers 306, 332, and 326; and contact 322. By choosing the materials of construction of layers 304 and 306 with the appropriate resistivities and permeabilities, the switching of the a.c. source 316 to one of the layers (e.g. 304) can result in considerably more heat being generated than if the source 316 were connected to the other layer (e.g. 306). The level at which less heat is generated may represent the normal operating level for raising a fluid to a desired temperature. The level at which greater heat is generated may represent a level at which elements which clog the pores and must be removed either vaporize or burn-off. By switching the source 316 to one set of contacts, the fluid heating level is achieved; by switching the source to the other pair of contacts, unclogging is performed by pyrolyzing contaminants. This dual-level embodiment would be particularly useful where organic fouling or contaminants (such as biofouling in an oceanographic context or paraffin in a diesel filter context) are to be removed from the pores.

By way of example, assume that the two magnetic layers 304 and 306 have the same resistivity, but layer 304 has an effective permeability of 200 and layer 306 has an effective permeability of 1000. The skin depth of layer 304 is proportional to $1/\sqrt{200}$ whereas the skin depth of layer 306 is proportional to $1/\sqrt{1000}$. When switched to the contact 314 (on layer 306) the a.c. current encounters high resistance resulting in large $I^2R$ heat generation. This heat is conducted throughout the laminate structure of device 300 and is preferably sufficient to vaporize or burn-off the removable elements deposited in the pores of any of the layers 302, 304 and 306. When connected back to contact 310 (on layer 304), the current encounters less resistance and sufficient heat is provided to only raise the temperature of the fluid. As in the Figure II(a) mode, the heat is substantially reduced if the depth of penetration totally penetrates either magnetic layer 304 or 306 and enters the low resistivity layer 302.

A similar multi-level thermal effect is achievable in the Figure I embodiment by stacking a layer of a second magnetic material, with differing resistivity and/or permeability characteristics, against it. Two pairs of contacts would likewise be provided to switch the current between the alternative paths. One path or layer would provide sufficient heat for raising the fluid temperature; the other path or layer would generate enough heat to burn off or vaporize the clogging contaminants.

Figure IV illustrates a conically-shaped heater device 400 that has an inner porous magnetic layer 402 of conical shape against and within an outer porous magnetic layer 404 also of conical shape. Fluid 406 flows into the large diameter opening 407 of the device 400 and toward the apex 412 of the cone of the device 400. An a.c. current source 408 is connected to substantially confine current to a narrow depth along the inner surface 410 of layer 402 of the device 400 when the temperature of the fluid 406 at a given area on the device 400 is below a desired level. When the fluid 406 at an area within the cone is at or above the desired temperature, the depth of current penetration is great. As a result, resistivity is reduced and I²R heating diminished.

It is notable that in the Figure IV embodiment heat is concentrated at the apex 412 of the device 400. This effect is due to an increase in resistance as the apex 412 is approached. Resistance, as previously noted, is inversely proportional to the cross-sectional area A through which current flows. The area A is equal to (depth of current penetration) X (width of current path). It is observed that for a conical element the width of the current path corresponds to the circumference. As the circumference decreases toward the apex 412, the area A decreases and resistance tends to increase.

Hence, at low temperatures where the permeability of layer 402 remains at a high effective level, the application of a.c. current to the layer 402 results in a large concentration of heat being provided at the apex 412.

When used as a filter, such as in a diesel fuel filter, this feature of this invention is particularly significant. If fuel, for example, is contained by the device 400 at a low temperature before an a.c. current from the source 408 is applied, the device 400 may be clogged with paraffin or the like. When the a.c. current is switched on, heat is concentrated at the apex 412 which will melt the paraffin next to it. Fuel is then able to at least flow through the apex 412 and easier diesel start-up is achieved. Heat spreads out to other regions on the device 400 away from the apex 412.

As the fluid approaches a desired temperature, the inverse relationship between μ and T dominates and autoregulation over a given temperature range is achieved. That is, the depth of current penetration varies with changes in permeability μ to thereby affect the heat generated at each area of the device 400.

Still referring to Figure IV, it is noted that the conical shape is similarly applicable to embodiments generally suggested in Figures I, II and III, such as an embodiment comprising a single porous magnetic layer of a conical shape or an embodiment comprising a porous magnetic layer and a porous low resistance layer shaped and positioned to form a conical, laminate structure. The principles of (a) concentrating heat at the apex, especially at temperatures well below a desired level, and (b) autoregulating at or near the desired temperature still apply.

Referring now to Figure V, the permeability versus temperature response for several magnetic materials which may be used as magnetic layers in the present invention are shown. This graph shows how the permeability (μ) for these various materials is inversely related to temperature (T) over a given range; that is, μ increases when T decreases. The graph, Figure V, may be supplemented with similar curves for other magnetic materials shown in the following Table 1.

TABLE 1

| Magnetic material | Curie point | Resistivity $\rho$ | Effective permeability* |
|---|---|---|---|
| 30% Ni 70% Fe | 100°C | $80\times10^{-6}$ | 100—300 |
| 36% Ni 64% Fe | 279°C | $82\times10^{-6}$ | 100—300 |
| 42% Ni 58% Fe | 325°C | $71\times10^{-6}$ | 200—400 |
| 46% Ni 54% Fe | 460°C | $46\times10^{-6}$ | 200—400 |
| 52% Ni 48% Fe | 565°C | $43\times10^{-6}$ | 200—400 |
| 80% Ni 20% Fe | 460°C | $58\times10^{-6}$ | 400—1000 |
| Kovar | 435°C | $49\times10^{-6}$ | 400—1000 |
| Low carbon steel | 760°C | $10\times10^{-6}$ | >1000 |
| Cobalt | 1120°C | $9.8\times10^{-6}$ | >1000 |
| Nickel | 353°C | $6.8\times10^{-6}$ | >500 |

\* below Curie point

As noted in Table 1, these materials vary in Curie point, resistivity, and effective permeability (at temperatures below the Curie point). The choice of materials of construction for use in the embodiments set forth in Figures I, II(a), III, and IV can provide the sundry properties and characteristics needed in tailoring the heater device to a particular application.

Figure VI illustrates a cylindrical or tubular structure device 600. This device 600 is particularly amenable to use as a filter, such as a diesel fuel filter. The device 600 is shown having two concentric cylindrical porous layers 602 and 604 laminated as in the two layer embodiment of Figure II. A solid end plug 618 forces the fluid 606 to flow through the pores of the layers 602 and 604. As in Figure II, layer 602 is of magnetic material as described above and layer 604 is a low resistance material, such as porous copper or bronze. Fluid, shown by arrows 606, flows through the device 600 and is heated and, optionally, filtered at the same time. The heating is achieved by a.c. current which passes between contacts 610 and 612 from a source 614.

The contacts 610 and 612 are preferably, but not necessarily, located as shown in Figure VI attached to the magnetic layer 602. In this regard, a.c. current follows a path along the inner surface of layer 602 between the contacts 610 and 612. The a.c. current is confined in depth of current penetration due to the skin effect.

As previously discussed, the two layers 602 and 604 provide the two effects of a self-regulating heater. If the temperature of the fluid is at the autoregulating temperature and the permeability, $\mu$, is low, the depth of current penetration extends from the inner surface of layer 602 outward into layer 604. Under this set of conditions, little heat is transferred to the fluid 606. If the fluid 606 falls to a temperature below the desired temperature, e.g. Curie point of the material of layer 602, the current recedes from the layer 604 and follows a narrower path within the layer 602 itself. As the skin depth decreases, both the effect of decreased depth and the effect of current receding from the layer 604 cause increased resistance and thus increased heating. To force fluid 606 through the device 600 to effect heating and filtering, a pressure differential is provided by conventional means, e.g. a pump, gravity, etc.

In Figure VII, a tubular device 700 like that of Figure VI is shown in a fuel line. The fuel line has an inner tube 702 coupled to a larger overlapping tube 704. The fuel shown by arrows 706 passes through the pores in the device 700. Self-regulated heating is, again, effected by sending an a.c. current from source 710 to the tubular device 700 so that current normally travels mainly along the surface 711 of a magnetic layer 712 that is opposite the interface 714 between the magnetic layer 712 and a low resistance layer 716.

At higher temperatures, a.c. current spreads outward and into layer 716, resulting in little heat generation.

With regard to Figure VII, it should be realized that the device 700 may serve as a heating device and as an optional filter with the pressure differential in the opposite direction as well. That is, fluid forced from tube 704 to tube 702 would also be heated and filtered.

Reference is now made to Figure VIII in which a cylindrical heater device 800 is shown having a porous cylindrical layer 802 encircled by a solid tubular magnetic layer 804. An a.c. source 806 is connected so that current flows along the outer surface of solid magnetic layer 804. As the temperature decreases, current spreads inwardly and eventually enters the cylindrical porous inner layer 802.

By passing an electrically conductive fluid 808 through the layer 802, the layer 802 acts as a low resistance layer. That is, when current spreads into layer 802 with conductive fluid 808 in its pores, the current follows a low resistance path through the fluid 808 and along the outer surface of layer 802. If the layer 802 is also low resistance, the layer 802 with conductive fluid 808 flowing through it simulates a solid layer for purposes of heat generation and transfer.

Similar to Figure VIII it should be recognized that a dual-temperature device based on Figure III may be readily envisioned as shown in Figure IX. In Figure IX, a tubular nonporous magnetic layer 852 encircles a cylindrical electrical conductor 854 with a tubular electrical insulator 856 being interposed therebetween. Coaxial with and encircling this magnetic layer 852 is a porous layer 858. Coaxial with and encircling the porous layer 858 is an outer nonporous magnetic layer 860 which, preferably, has a different permeability and, optionally, resistivity response relative to temperature than layer 852. The porous layer 858 is preferably of low resistance but, in any case, becomes low resistance as an electrically conductive fluid 862 flows through it. The porous layer 858 is in contact with the inner magnetic layer 852 and with the outer magnetic layer 860 to permit electrical and thermal conduction between them. Because of their proximity, layers 852, 858, and 860 are thermally conductive.

As in Figure III a switch 864 is provided to initially confine current from an a.c. source 866 to either the outer surface of layer 860—with the switch 864 in the lower position—or the inner surface of layer 852—with the switch 864 in the upper position. In either case, current spreads toward the porous layer 858 as the depth of current penetration increases. The thickness of the porous layer 858 is preferably on the order of five skin depths—as it is also in low resistance layers of the Figure III and Figure VIII devices.

Referring to Figure X, a reaction chamber 900 is shown. The reaction chamber 900 includes a pre-reaction zone 901 into which reactants A, B, and C are introduced and a reaction zone 902. Along a length of the prereaction zone 901 is a self-regulating heater 904 comprising two porous layers 906 and 908. Layer 906 is a thermally conductive, preferably high resistance magnetic material. Across points 910 and 912 an a.c. current is applied. Due to the skin effect, the a.c. current is substantially confined to a thickness defined by the above noted expression $\sqrt{\rho/\mu f}$. As the layer 906 increases in temperature (over a predefined range), the permeability $\mu$ for layer 906 decreases causing the a.c. current to spread into layer 908. In one form of the invention, the layer 908 is a thermally conductive, low resistance, nonmagnetic material. In this embodiment, the resistance heating drops off sharply when the current begins to flow through the layer 908. That is, above a temperature of $T_{II}$ at which the a.c. current enters the layer 908, little heat is provided. Hence, both reactants A and B will be raised to temperature $T_{II}$, as they enter the prereaction zone 901.

As a result of normal or induced mixing, the reactants A and B combine to form a mixture M that enters the reaction zone 902 to chemically react with another reactant C which can be introduced directly into the reaction zone 902. Either or both reactants A and B can enter upstream of layer 906 or tangential to the surface of layer 906 to cause mixing. Mixture M and reactant C each flow through another heater device 916 comprised of a single porous, magnetic layer and having contacts 918 and 920 which are connected to a source (not shown). The device 916 provides more and less heat depending on how deeply a.c. current penetrates it. If the initial temperature ($T_I$ of the mixture M is too low, the depth of current penetration in layer 908 decreases or terminates and the amount of heat generated increases to raise the mixture M to temperature $T_{II}$. Reactant C is also raised to temperature $T_{II}$, which represents the optimal reaction temperature. At temperature $T_{II}$, maximum yield, for example, can be achieved.

In order to permit reactants which exceed the optimal temperature $T_{II}$ to be cooled down, cooling pipes 924 can be used to withdraw heat from the reaction zone 902.

The cooling pipes 924, or other such cooling mechanisms, serve at least two purposes. First, the cooling pipes 924 can provide constant cooling which may prevent reaction runaway or the reaction zone overheating in a high exothermic reaction. Secondly, the cooling pipes 924 may lower the temperature in the reaction zone 902 while the heater device 916 generates heat to raise the temperature. The combined effects of the cooling pipes 924 and heater device 916 can thus very narrowly define the temperature range in reaction zone 902 and also increase the speed of response to slight changes in reactant temperatures.

As an alternative, the layer 908 may comprise another layer of magnetic material. In this alternative embodiment, layer 906 and 908 have preferably, distinct and different $\mu$ versus T responses. Accordingly, a specific heat versus temperature profile can be defined along the length of the heater device 904.

Referring now to Figure XI, a cylindrical reaction chamber 1000 is shown having a pre-reaction zone 1002, a reaction zone 1004, and a post-reaction zone 1006. Along the length of the chamber 1000 is an elongated, cylindrical porous layer 1008 made of a magnetic material with high permeability, $\mu$. Distributed at various locations along the length and within the chamber 1000 are cooling pipes 1010, 1012, 1014 and 1016. Each of these cooling pipes, 1010, 1012, 1014 and 1016, have separate controls.

Reactant E enters pre-reaction zone 1002 and passes through the porous layer 1008. An a.c. current is supplied to layer 1008 through contacts 1020 and 1022. The current flows along the outer surface of this cylindrical layer 1008, the depth of penetration being dependent on the value of $\mu$ at a given time and location along the layer 1008.

If the temperature of reactant E is below a desired temperature, cooling pipes 1010 and 1012 may be shut off. However, it is within the teachings of this invention that the cooling be maintained continuously.

Also if the temperature of reactant E is below its desired level, the depth of current penetration along the prereaction zone 1002 is small—the $\mu$ versus T response for layer 1008 along the prereaction zone having been defined to achieve this result. The amount of Joule heat thus increases as the depth of current decreases, with heat being transferred to reactant E.

Reactant F, which may already be at a desired temperature is fed directly into the reaction zone 1004. Reactants E and F may, optionally, pass through a sheet 1026 of catalyst. Catalytic pellets, coatings, or other elements can be provided within the reaction zone to promote the desired reaction. After E and F react, a product N then flows through the post reaction zone 1006.

For exothermic reactions which are to be run under tight thermal control, the embodiment in Figure XI is especially noteworthy. First, the cooling pipe 1014 will withdraw heat from the reaction zone 1004. Second, as the reaction zone 1004 heats up, the current will penetrate the entire layer 1008—the current will spread from the outer surface inward toward the center of the layer 1008—to minimize the generation of heat. If the diameter of the layer 1008 is large, the difference in heat generated either when the layer 1008 is barely penetrated and/or when it is totally penetrated will be large. Third, the amount of cooling is preferably gauged to the maximum heat which can be generated in the reaction.

It should also be realized that the depth of penetration may be affected by varying the composition of the layer 1008 along its length. For example, if layer 1008 is an alloy, the $\mu$ versus T characteristic along the length and/or cross-section can be varied as desired. If the alloying is varied in discrete steps along its length, a laminate structure can be simulated.

By proper selection of material along the length of layer 1008, it is contemplated that a fluid passing through the prereaction zone at a given temperature will be heated while a fluid passing through the reaction zone at the same given temperature will see little heating within the layer 1008.

It should be noted that the resistivity of the layer 906 and of the layer of device 916 (in Figure X) and of the layer 1008 (in Figure XI) may also affect the measure of heat generated—although to a lesser extent than permeability. In addition, the frequency f and amplitude of the a.c. current may also affect the level of heating. Finally, the magnetic field to which a magnetic material is exposed also affects the $\mu$ versus T response and thus represents another parameter for adjusting heat transfer. All of these factors may be considered in controlling the temperature of a liquid, gas, suspension, or other flowing substance passing through a reaction chamber.

Referring again to Figures X and XI, it should be realized that the pores of the layers 906, 908, 916, and/or 1008 may be dimensioned small enough to entrap contaminant particles. The filtering of such particles may not only enhance yield but may also reduce the forming of undesired by-products such as gel. To free the pores of such particles, a layer may be raised in temperature high enough to vaporize the particles or burn them off. This elevated temperature may, of course, be achieved by increasing the current amplitude or frequency, by increasing $\mu$ or otherwise increasing the resistance to current, by directing a high d.c. current across the layer, by switching the current between either of two laminated layers one of which provides more heat for a given current, or by other means.

Turning now to Figure XII, a particularly significant aspect of this invention is depicted. A tapered reaction chamber 100 is shown having a circumference which varies along its length. The prereaction zone 1102 has a funnel shape the small end of which leads into the reaction zone 1104. The reaction zone 1104 has a constant cross-section which leads into a bell-shaped cross-section of the post-reaction zone 1106.

In this embodiment, a reactant H enters the pre-reaction zone 1102, the flow rate being controlled by a valve 1108. It is readily noted that the pressure and the volume of the reactant H enroute to the reaction zone 1104 is determined mainly by the dimensions of the pre-reaction zone 1102 and the flow rate of the reactant H. A heater device 1110 (comprising one or more layers as described above) is positioned within the pre-reaction zone 1102. A cooling pipe 1112 is also included within this zone. By noting that, at least for a gas:

$$PV = nRT$$

where P is pressure, V is volume, R is a constant, and T is temperature (n being moles), it is recognized that the embodiment of Figure XII reflects desired control over P, V and T. Accordingly, precise control of a reaction can be achieved.

With regard to the chamber dimensions shown in Figure XII, it should of course be realized that any of several shapes may be employed at each zone as a particular reaction may require. It should also be understood that any and all zones may include cooling pipes or self-regulating heater devices or both as desired.

There are of course numerous ways of controlling temperature along the length of a reaction chamber. In the pre-reaction zone, e.g. zone 1102 of Figure XII, a reactant H may be either (a) lowered in temperature due to the withdrawal of heat by the cooling pipe 1112; or (b) maintained at its entry temperature; or (c) elevated in temperature by the heater device 1110. Fluids in the reaction zone and in the post-reaction zone may similarly be lowered, maintained, or raised in temperature since cooling pipes and heater devices are included in each zone. The temperature control across the reactor need not, of course, be constant but can be varied depending on the fluid being heated, its flow rate, the dimensions of the chamber, variations in $\rho$ or $\mu$ along the chamber length, and other factors.

In accordance with the invention, reactions might include controlled temperature variations within one reactor zone. For example, a reactant J at a high temperature may be cooled along a first length of the pre-reaction zone so that it may be mixed at a certain temperature with a reactant K. The mixture may then be further elevated in temperature in the pre-reaction zone enroute to the reaction zone. Other such combinations are also contemplated and within the scope of this invention.

By way of examples and not limitation, the following examples suggest how the present invention might be employed in controlling chemical reactions.

The present invention is capable of broad use in controlling chemical reactions since it permits tight control of various reaction conditions, before, during and after a reaction takes place. It is well known that some reactions use batch processing techniques; however, the present invention is more useful in continuous processing. Some polymerization reactions requiring the conditions listed have been selected as illustrative examples. Strict temperature control during and after the reaction are required for processes disclosed in: 1) U.S. Patent No. 2,518,388 issued to Simon for urea-formaldehyde adhesives; 2) Silicon resin formation as in *Polymer Synthesis II*. Chapter 4, pg. 114, ed. Sandler, Karo; Academic Press, New York, NY (1977); 3) Poly Epoxy formation using the method of Ravey et al, J. Polym. Sci. & Polym. Chem. 12, 2821 (1974). Strict temperature controls of the pre-reaction stages are required for alkyd resins formation using the method of Martens in *Alkyl Resins*, pp. 71—73, Von Nostrand, Princeton, NJ (1961).

Narrowly defined temperature and pressure controls must be used for the following reactions: 1) Ferrocene using the method found in *Organic Polymeric Semiconductors*, Chapt. 4, Paushkin et al ed., John Wiley & Sons, NY (1974); and 3) Block Copolymerization (tetrahydrofuran method) using the method of Saegusa et al in *Block Polymers* pg. 293 Plenum Press, NY (1970).

In addition to the above embodiments, it should be noted that this invention also encompasses other aspects. First, it should be noted that skin depth and depth of current penetration are functions of current frequency as well as the resistivity and permeability of the material of construction. It is within the scope of this invention to select any of these parameters to provide additional means for decreasing the depth of current penetration to increase the heat generated for contaminant vaporization or burn-off. Similarly, the invention has suggested above that current amplitude (I) remains constant. By permitting this factor to vary in a prescribed fashion, the heat response can further be adjusted.

Second, in the Figures the various embodiments show each layer having uniform thickness and apparently uniform composition. Additional modes of this invention could provide for tapered thicknesses and/or varying the alloy compositions of a layer along the current path. By these techniques, thermal gradients may be readily produced. For example in Figure II if the magnetic layer 204 were to be tapered so that it was thicker toward one end, the current would totally penetrate the less thick portion before penetrating the thicker end of the layer 204. The thicker end would still be generating considerable heat while the thinner end would generate much less, although both ends and the entire layer will still be in contact with fluid at a single given temperature. Similar effects can be achieved by varying the alloying along the layer, whereby varying the permeability versus temperature response at different areas along the current path.

Third, it should be realized that this invention suggests that a differential pressure may or may not be applied to force fluid through any of the heater devices or heater-filters. Fluid may thus, optionally, diffuse or be forced through the pores in the various layers.

Fourth, the heat generated by a device of this invention may vary between a maximum and minimum the ratio of which depends on the various factors discussed above and their interrelation. Ratios of minimum to maximum heat output of 6:1 or 45:1, for example, may be achieved.

Fifth, especially with regard to the device 700 of Figure VII, it is within the scope of this invention to provide a mechanism for inserting these heating devices in other systems such as the fuel line 702. That is, the device 700, for example, may be inserted or removed from such a system by means of conventional coupling techniques.

Sixth, in embodiments employing a low resistance layer it is usually preferred that such a layer be non-magnetic and thermally conductive although not necessarily so.

Seventh, it is noted that this invention is directed toward an autoregulating heater that is porous so that fluid can pass through it. This generic concept includes further embodiments characterized by having at least one porous layer and at least one non-porous layer, and at least one layer which is magnetic so as to provide an autoregulating effect. This effect may be achieved by passing the fluid through a porous magnetic layer or by passing the fluid through a porous low resistance, non-magnetic layer in thermal contact with a porous or non-porous magnetic layer.

Eighth, according to this invention, a heater device can be designed to autoregulate the temperature of a fluid so as to achieve a maximum flow rate. At or below this maximum flow rate, in other words, the heater device raises the temperature of the fluid to a desired level.

Finally, it should be recognized that features and elements of any one embodiment may be included in other embodiments. For example, dual-level temperature control for eliminating contaminants may be used with any heater which may be clogged; diffuse or pressurized fluid flow may be employed with the various embodiments; and the use of a plurality of magnetic layers with one or more low resistance layers may form a laminate structure according to this invention.

The illustrations of "ground" in the drawings, although basically applicable only to d.c. circuitry, are employed for purposes of clarifying the location of the concentration of current in the various conductors. In RF systems, a coaxial cable is normally connected between the power supply and the heater. In such circuits the so-called "ground" connection is made to the shield of the cable and the "ungrounded" connection is made to the cable center conductor.

It should be noted that preferably fluid should flow first through the layer remote from the current return path and then through the layer of ferromagnetic material adjacent the current return path. This assumes that fluid flows at a constant flow rate through the device. In the vast majority of cases the remote layer is at least two to three times thicker than the adjacent layer. Thus by flowing fluid in the recommended direction the fluid may be raised to autoregulating temperature over a greater period of time and the heat input may be less than in the case when fluid flows in the opposite direction. Finally, if such reverse flow is used, sufficient heat must be applied to raise the fluid to autoregulating temperature well before the fluid exits the adjacent layer or autoregulating cannot be achieved. The additional heat dissipates into the remote layer and may cause the fluid temperature to raise above the autoregulating temperatures in the remote (uncontrolled) layer.

Moreover, it is noted that the source of current may be an ohmic source, an inductive source or any other desired source of current at a selectable amplitude and frequency.

## Claims

1. An auto-regulating electrical heater for regulating the temperature of a fluid, comprising a single layer or a plurality of contiguous layers,

the single layer or at least one of the contiguous layer being a thermally conductive layer of comparatively high electrical resistance but nevertheless a.c. conducting magnetic material, the permeability of which is inversely related to its temperature over a given temperature range, and being provided with electrical terminals for passage through it of an a.c. current the depth of penetration of which current into said layer is dependent on its permeability and hence its temperature;

characterised in that at least said thermally conductive layer of magnetic material or a layer contiguous therewith is porous and adapted to have at least a portion of a fluid to be heated located in its pores.

2. A heater as claimed in Claim 1, wherein the electrical terminals are applied to said magnetic material layer substantially at a surface thereof, whereby when a constant amplitude a.c. current is applied to said electrical terminals the depth of penetration $d_1$ of the current from said surface in said magnetic material layer is defined according to the expression:

$$d_1 \alpha \; 1/\sqrt{\mu_1}$$

in which $\mu_1$ is the magnetic permeability of said magnetic material layer, and wherein the temperature and hence the permeability of said magnetic material layer is influenced by the temperature of said fluid in said pores with an increase in temperature causing increase in the depth of current penetration in said magnetic material layer and hence a decrease in the Joule heating effect.

3. A heater as claimed in Claim 2, wherein under the influence of the fluid the temperature and hence the permeability of the magnetic material layer varies from areas to areas of said layer, whereby the depth of current penetration and hence the Joule heating also varies from area to area.

4. A heater as claimed in Claim 1 or Claim 2, comprising a laminar structure including (a) a first layer consisting of the aforesaid thermally conductive high resistance layer of magnetic material, and (b) a second layer consisting of thermally conductive low electrical resistance material, at least one of said layers being porous to receive the fluid to be heated, and the interface between said first and second layers permitting electrical and thermal conduction between them.

5. A heater as claimed in Claims 2 and 4, wherein said surface of the magnetic material layer to which the electrical terminals are applied is that surface opposite to said interface, and when the temperature T exceeds a predetermined level the thickness of said magnetic material layer is totally penetrated by the current so that the current flow begins to penetrate said second layer to a depth $d_2$ according to the formula

$$d_2 \alpha \; 1/\sqrt{\mu_2}$$

where $\mu_2$ is the magnetic permeability of the second layer along the current path.

6. A heater as claimed in Claim 5, wherein under the influence of the fluid the temperature of the laminar structure varies from area to area, whereby the depth of penetration $d_1$ of the magnetic material layer and the depth of penetration $d_2$, if any, of said second layer also vary from area to area, increasing in accordance with temperature, and likewise the Joule heating effect varies from area to area.

7. A heater as claimed in any preceding Claim, wherein the composition of the magnetic material layer varies from area to area whereby said layer has a permeability versus temperature characteristic that varies from area to area.

8. A heater as claimed in any preceding Claim, wherein the Joule heat generated in response to the application of said a.c. current is sufficient to raise the temperature of at least some of said fluid in said

14

pores and an area of the magnetic material layer associated therewith into said given temperature range in which the magnetic permeability of said magnetic material layer is inversely related to its temperature.

9. A heater as claimed in any preceding Claim, wherein the porous layer acts as a filter to filter contaminants from the fluid which is forced through the porous layer under pressure.

10. A heater as claimed in Claim 9, including means for selectively heating the porous layer to a temperature at which the pores become freed of the filtered contaminants.

11. A heater as claimed in Claims 5 and 9 or Claims 5 and 10, wherein both the magnetic material layer and the second layer are porous, the fluid being forced under pressure through both, and the pores of at least said second layer are small enough to filter out contaminants in the fluid.

12. A heater as claimed in Claim 10, or Claims 10 and 11, wherein said means for selectively heating the contaminant-filtering porous layer comprise a further lamina of a.c. conducting material in thermal transfer relationship with said porous layer and having a magnetic permeability such that, for the same conditions, its resistance to current ratio, and consequently its Joule heating, is greater than that of said thermally conductive magnetic material layer, with means for selectively switching a.c. current to flow in said further lamina whereby the temperature for freeing the pores of the contaminant-filtering porous layer from the filtered contaminants is achieved.

13. A heater as claimed in any preceding Claim, including an a.c. source connected across said electrical terminals and able to provide a current of fixed amplitude and constant frequency.

14. A heater as claimed in any preceding Claim, wherein the layer or layers encircle an axis to form a tubular structure.

15. A heater as claimed in Claims 4 and 14, wherein the thermally conductive magnetic material layer is encircled by said second layer.

16. A heater as claimed in Claims 4 and 14, wherein said second layer is porous and is encircled by said thermally conductive magnetic material layer which is non-porous.

17. A heater as claimed in Claim 16, further comprising a third layer which is non-porous and is encircled by said second layer so that the porous layer is sandwiched between the non-porous layers, said third layer also being of comparatively high electrical resistance a.c. current conducting magnetic material with a magnetic permeability that varies inversely with temperature over a characteristic range and being provided with electrical terminals for the passage through it of a.c. current at its inner surface.

18. A heater as claimed in any of Claims 1 to 13, wherein, at constant temperature and constant current amplitude, the resistance of the magnetic material layer, and hence the Joule heating, varies along the path of current.

19. A heater as claimed in Claim 18, wherein the magnetic material layer tapers along the path of current.

20. A heater as claimed in Claim 19, wherein the magnetic material layer is a porous layer of hollow conical form and said fluid flows in a direction generally aligned with the cone axis.

21. A heater as claimed in Claim 20, wherein the electrical terminals of the magnetic material layer are located at the apex and the periphery of the base of the cone.

22. A heater as claimed in Claims 4 and 21, wherein said second layer is also a porous layer of hollow conical form that is contiguous and coaxial with said magnetic material layer.

23. A heater as claimed in Claim 22, wherein said second layer externally surrounds said magnetic material layer.

24. A heater as claimed in any of Claims 1 to 13, wherein said thermally conductive magnetic material layer is one of a plurality of such layers all having the same magnetic permeability versus temperature characteristic and all being porous and arranged in a stack in which consecutive layers are contiguous and thereby in electrical contact.

25. A chemical reaction chamber having at least one fluid reactant therein and provided with an auto-regulating electrical heater according to any preceding claim for heating said fluid and controlling the temperature thereof to a desired level.

26. A reaction chamber as claimed in Claim 25, having a reaction zone in which a reaction occurs at a reaction temperature above that at which said at least one fluid reactant enters the chamber and the auto-regulating heater is arranged to promote attainment of said reaction temperature.

27. A reaction chamber as claimed in Claim 26, wherein a plurality of fluid reactants enter the reaction zone and produce a fluid product, and the heater is disposed along the reaction zone such that the reactants and said fluid product flow therethrough and the heater promotes attainment by each of them of a desired temperature by the auto-regulated transfer of heat.

28. A reaction chamber as claimed in Claim 26 or Claim 27, wherein the heater is arranged also to receive at least one fluid product from the outflow of the reaction zone to promote the attainment of a desired temperature by said fluid product.

29. A reaction chamber as claimed in any of Claims 26 to 28, further comprising a cooling means for withdrawing heat from fluid in the chamber.

30. A reaction chamber as claimed in Claim 29, wherein the heater and cooling means respectively transfer heat to and withdraw heat from fluid at the same location within the chamber at the same time.

31. A reaction chamber as claimed in Claim 30, wherein in addition to said location at which both

15

heating and cooling occur, there is a further location at which only heating by said auto-regulating heater occurs.

32. A reaction chamber as claimed in any of Claims 26 to 31, wherein the reaction zone contains a catalyst.

33. A reaction chamber as claimed in any of Claims 26 to 32, wherein a magnetic field is applied to vary the magnetic permeability versus temperature characteristic of the magnetic material layer of the heater.

34. A reaction chamber as claimed in any of Claims 26 to 33, wherein at least part of the a.c. current path through the magnetic material layer of the heater is transverse to the direction of fluid flow.

35. A reaction chamber as claimed in any of Claims 26 to 34, further comprising means for adjusting the frequency and amplitude of a.c. current supplied to the magnetic material layer of the heater.

36. A reaction chamber as claimed in any of Claims 26 to 35, having a pre-reaction zones upstream of the reaction zone, a porous layer of the heater being disposed within the pre-reaction zone in the path of flow of at least one fluid reactant en route to the reaction zone.

37. A reaction chamber as claimed in Claim 36, further comprising means for introducing fluid reactants into said porous heater layer within the pre-reaction zone at various locations along the pre-reaction zone, the heat applied to each reactant en route to the reaction zone being dependent on the location at which it is introduced.

38. A reaction chamber as claimed in any of Claims 26 to 37, wherein the chamber has a pre-reaction zone upstream of the reaction zone and a post-reaction zone downstream of the reaction zone, a porous layer of the heater extends along the pre-reaction zone, a porous layer of the heater extends along the reaction zone and a porous layer of the heater extends along the post-reaction zone, whereby heat is applied to fluid flowing through all three zones in an auto-regulating manner, and cooling means are also provided for withdrawing heat from the zones in a predetermined manner.

39. A reaction chamber as claimed in Claim 38, wherein fluid flow control means are provided for controlling flow rates into the chamber, and the dimensions of the chamber are so arranged, that the pressure and volume of the fluids in each zone are controlled in a prescribed manner.

**Patentansprüche**

1. Selbstregulierender elektrischer Heizer zur Regulierung der Temperatur eines Fluidums, mit einer einzelnen Schicht und einer Anzahl von aneinanderliegenden Schichten,

wobei die einzelne Schicht oder wenigstens eine der aneinanderliegenden Schichten eine thermisch leitende Schicht aus einem magnetischen Material ist, das einen hohen elektrischen Widerstand hat, jedoch nichtsdestoweniger Wechselstrom leitend ist, wobei die Permeabilität des magnetischen Materials umgekehrt proportional zu seiner Temperatur über einen vorgegebenen Temperaturbereich ist und mit elektrischen Klemmen zur Durchleitung von Wechselstrom durch es versehen ist, dessen Eindringtiefe in die genannte Schicht abhängig ist von seiner Permeabilität und somit seiner Temperatur;

dadurch gekennzeichnet, daß wenigstens die genannte thermisch leitende Schicht aus magnetischem Material oder eine daran anliegende Schicht porös und in der Lage ist, wenigstens ein Teil von zu erwärmendem Fluidum in seinem Poren aufzunehmen.

2. Heizer nach Anspruch 1, dadurch gekennzeichnet, daß die elektrischen Klemmen an die Magnetmaterialschicht im wesentlichen an einer Oberfläche davon angebracht sind, wodurch bei Anlegen eines Wechselstromes mit konstanter Amplitude an die genannten elektrischen Klemmen die Eindringtiefe $d_1$ des Stromes von der Oberfläche in die genannte Magnetmaterialschicht durch den folgenden Ausdruck definiert ist:

$$d_1 \alpha \ 1/\sqrt{\mu_1}$$

worin $\mu_1$ die magnetische Permeabilität der Magnetmaterial schicht ist, und daß die Temperatur und somit die Permeabilität der genannten Magnetmaterialschicht durch die Temperatur des genannten Fluidums in den Poren beeinflußt ist, indem ein Anstieg der Temperatur einen Anstieg in der Eindringtiefe des Stromes in die genannte Magnetmaterialschicht und somit eine Verringerung des Joule'schen Wärmeeffekts bewirkt.

3. Heizer nach Anspruch 2, dadurch gekennzeichnet, daß unter dem Einfluß des Fluidums die Temperatur und somit die Permeabilität der Magnetmaterialschicht von Bezirk zu Bezirk der Schicht variiert, wodurch die Eindringtiefe des Stromes und somit die Joule'sche Erwärmung ebenfalls von Bezirk zu Bezirk variiert.

4. Heizer nach Anspruch 1 oder 2, gekennzeichnet durch eine laminare Struktur mit einer (a) ersten Schicht bestehend aus der zuvor genannten thermisch leitenden Schicht von Magnetmaterial hohen Widerstandes und (b) einer zweiten Schicht bestehend aus thermisch leitendem Material niedrigen elektrischen Widerstandes, wobei wenigstens eine der genannten Schichten porös ist, um das zu erwärmende Fluidum aufzunehmen, und wobei die Grenzfläche zwischen den genannten ersten und zweiten Schichten eine elektrische und thermische Leitung dazwischen gestattet.

5. Heizer nach den Ansprüchen 2 und 4, dadurch gekennzeichnet, daß die Oberfläche der Magnetmaterialschicht, an der die elektrischen Klemmen angebracht sind, die der genannten Grenzfläche

16

abgewandte Oberfläche ist, und daß dann, wenn die Temperatur T ein vorbestimmtes Niveau überschreitet, die Dicke der genannten Magnetmaterialschicht vollständig durch den Strom durchdrungen ist, so daß der Stromfluß beginnt, in die zweite Schicht einzudringen bis zu einer Tiefe $d_2$ gemäß der Formel

$$d_2 \alpha \ 1/\sqrt{\mu_2}$$

worin $\mu_2$ die magnetische Permeabilität der zweiten Schicht entlang dem Strompfad ist.

6. Heizer nach Anspruch 5, dadurch gekennzeichnet, daß unter dem Einfluß des Fluidums die Temperatur der laminaren Struktur von Bezirk zu Bezirk variiert, wodurch die Eindringtiefe $d_1$ der Magnetmaterialschicht und die Eindringtiefe $d_2$, falls vorhanden, der zweiten Schicht ebenfalls von Bezirk zu Bezirk variieren, in Übereinstimmung mit der Temperatur ansteigen, und in gleicher Weise der Joule'sche Erwärmungseffekt von Bezirk zu Bezirk variiert.

7. Heizer nach einem der vorhergehenden Ansprüche, dadurch gekennzeichnet, daß die Zusammensetzung der Magnetmaterialschicht von Bezirk zu Bezirk variiert, wodurch die genannte Schicht eine Permeabilitäts - Temperatur - Charakteristik hat, die von Bezirk zu Bezirk variiert.

8. Heizer nach einem der vorhergehenden Ansprüche, dadurch gekennzeichnet, daß die in Abhängigkeit von der Einspeisung des genannten Wechselstromes erzeugte Joule'sche Wärme ausreicht, um die Temperatur wenigstens eines Teils des Fluidums in den genannten Poren und in einem dem zugeordneten Bezirk der Magnetmaterialschicht in den genannten vorgegebenen Temperaturbereich hinein anzuheben, in dem die magnetische Permeabilität der genannten Magnetmaterialschicht umgekehrt proportional zu ihrer Temperatur ist.

9. Heizer nach einem der vorhergehenden Ansprüche, dadurch gekennzeichnet, daß die poröse Schicht als Filter wirkt, um Verunreinigungen aus dem Fluidum herauszufiltern, das unter Druck durch die poröse Schicht hindurchgepreßt wird.

10. Heizer nach Anspruch 9, gekennzeichnet durch Mittel zur selektiven Erwärmung der porösen Schicht auf eine Temperatur, bei der die Poren von den ausgefilterten Verunreinigungen befreit werden.

11. Heizer nach den Ansprüchen 5 und 9 und 10, dadurch gekennzeichnet, daß sowohl die Magnetmaterialschicht und die zweite Schicht porös sind, daß das Fluidum unter Druck durch beide hindurchgepreßt wird, und daß die Poren wenigstens der genannten zweiten Schicht klein genug sind, um Verunreinigungen in dem Fluidum herauszufiltern.

12. Heizer nach Anspruch 10 oder den Ansprüchen 10 und 11, dadurch gekennzeichnet, daß die Mittel zur selektiven Erwärmung der Verunreinigungen herausfilternden porösen Schicht eine weitere Schicht von Wechselstrom leitendem Material aufweisen, die in Wärme übertragender Beziehung zu der genannten porösen Schicht steht und eine solche magnetische Permeabilität hat, daß für die gleichen Bedingungen ihr Widerstands/Stromverhältnis und folglich ihre Joule'sche Erwärmung größer ist als die der genannten thermische leitenden Magnetmaterialschicht, wobei Mittel zur selektiven Einschaltung von Wechselstrom vorgesehen sind, damit dieser in der genannten weiteren Schicht fließt, wodurch die Temperatur zur Befreiung der Poren der Verunreinigungen ausfilternden porösen Schicht von den ausgefilterten Verunreinigungen erzielt wird.

13. Heizer nach einem der vorhergehenden Ansprüche, gekennzeichnet durch eine Wechselstromquelle, die an die genannten elektrischen Klemmen angeschlossen und in der Lage ist, einen Strom fester Amplitude und konstanter Frequenz zu liefern.

14. Heizer nach einem der vorhergehenden Ansprüche, dadurch gekennzeichnet, daß die Schicht oder Schichten eine Achse umgeben und so ein rohrförmiges Gebildet bilden.

15. Heizer nach den Ansprüchen 4 und 14, dadurch gekennzeichnet, daß die thermisch leitende Magnetmaterialschicht von der genannten zweiten Schicht umgeben ist.

16. Heizer nach den Ansprüchen 4 und 14, dadurch gekennzeichnet, daß die genannte zweite Schicht porös und von der genannten thermisch leitenden Magnetmaterialschicht umgeben ist, die nicht porös ist.

17. Heizer nach Anspruch 16, gekennzeichnet durch eine dritte Schicht, die nicht porös und durch die genannte zweite Schicht umgeben ist, so daß die poröse Schicht zwischen den nicht porösen Schichten eingebettet ist, wobei die dritte Schicht ebenfalls aus einem magnetischen Material vergleichsweise hohen elektrischen Widerstandes und einer Leitfähigkeit für Wechselstrom besteht und eine magnetische Permeabilität hat, die invers zur Temperatur über einen charakteristichen Bereich variiert, und mit elektrischen Klemmen zur Hindurchleitung von Wechselstrom an ihrer inneren Fläche versehen ist.

18. Heizer nach einem der Ansprüche 1 bis 13, dadurch gekennzeichnet, daß bie konstanter Temperatur und konstanter Stromamplitude der Widerstand der Magnetmaterialschicht und somit die Joule'sche Erwärmung entlang dem Strompfad variiert.

19. Heizer nach Anspruch 18, dadurch gekennzeichnet, daß sich die magnetische Materialschicht entlang der Strompfad verjüngt.

20. Heizer nach Anspruch 19, dadurch gekennzeichnet, daß die Magnetmaterialschicht eine poröse Schicht hohler, konischer Form ist, und daß das Fluidum in einer Richtung im wesentlichen entsprechend der Konusachse fließt.

21. Heizer nach Anspruch 20, dadurch gekennzeichnet, daß die elektrischen Klemmen der Magnetmaterialschicht an der Spitze und der Peripherie der Basis des Konusses angeordnet sind.

22. Heizer nach den Ansprüchen 4 und 21, dadurch gekennzeichnet, daß die gekennante zweite Schicht

EP 0 151 131 B1

ebenfalls eine poröse Schicht hohler, konischer Form ist und angrenzend zu und koaxial mit der Magnetmaterialschicht verläuft.

23. Heizer nach Anspruch 22, dadurch gekennzeichnet, daß die genannte zweite Schicht außen die genannte Magnetmaterialschicht umgibt.

24. Heizer nach einem der Ansprüche 1 bis 13, dadurch gekennzeichnet, daß die genannte thermisch leitende Magnetmaterialschicht eine einer Anzahl von solchen Schichten ist, die alle den gleichen Permeabilitäts verlauf in Abhängigkeit von der Temperatur haben und alle porös sind und in einem Stapel angeordnet sind, in dem aufeinanderfolgende Schichten aneinander anliegen und damit in elektrischem Kontakt stehen.

25. Chemische Reaktionskammer mit wenigstens einem flüssigen Reaktionsmittel und mit einem selbstregulierenden elektrischen Heizer gemäß einem der vorhergehenden Ansprüche zur Erwärmung des Fluidums und Steuerung der Temperatur derselben auf ein gewünschtes Niveau.

26. Reaktionskammer nach Anspruch 25, gekennzeichnet durch eine Reaktionszone, in der eine Reaktion bei einer Reaktionstemperatur oberhalb derjenigen auftritt, bei der wenigstens ein flüssiges Reaktionsmittel in die Kammer eintritt, wobei der selbstregulierende Heizer die Erreichung der genannten Reaktionstemperatur fördert.

27. Reaktionskammer nach Anspruch 26, dadurch gekennzeichnet, daß eine Anzahl von flüssigen Reaktions mitteln in die Reaktionszone eintritt und ein Fluidumsprodukt erzeugt, und daß der Heizer entlang der Reaktionszone angeordnet ist, derart, daß die Reaktionsmittel und das genannte Fluidumsprodukt durch ihn hindurchfließen, und daß der Heizer die Erreichung einer gewünschten Temperatur bei jedem von ihnen durch die selbstregulierte Übertragung von Wärme bewirkt.

28. Reaktionskammer nach Anspruch 26 oder 27, dadurch gekennzeichnet, daß der Heizer wenigstens ein Fluidumsprodukt von dem Auslaß der Reaktionszone erhält, um die Erreichung einer gewünschten Temperatur durch das Fluidumsprodukt zu fördern.

29. Reaktionskammer nach einem der Ansprüche 26 bis 28, gekennzeichnet durch eine Kühleinrichtung zur Entnahme von Wärme aus dem Fluidum in der Kammer.

30. Reaktionskammer nach Anspruch 29, dadurch gekennzeichnet, daß der Heizer und die Kühleinrichtung jeweils Wärme dem Fluidum zuführen und von ihm ableiten an dem gleichen Ort innerhalb der Kammer zu der gleichen Zeit.

31. Reaktionskammer nach Anspruch 30, dadurch gekennzeichnet, daß zusätzliche zu dem genannten Ort, an dem sowohl Erwärmung als auch Abkühlung stattfindet, ein weiterer Ort vorgesehen ist, an dem nur Erwärmung durch den selbstregulierenden Heizer erfolgt.

32. Reaktionskammer nach einem der Ansprüche 26 bis 31, dadurch gekennzeichnet, daß die Reaktionszone einen Katalysator aufweist.

33. Reaktionskammer nach einem der Ansprüche 26 bis 32, dadurch gekennzeichnet, daß ein magnetisches Feld angelegt ist, um die Temperaturcharakteristik der magnetischen Permeabilität der magnetischen Materialschicht des Heizers zu ändern.

34. Reaktionskammer nach einem der Ansprüche 26 bis 33, dadurch gekennzeichnet, daß wenigstens ein Teil des Wechselstrompfades durch die Magnetmaterialschicht des Heizers quer zur Richtung des Fluidumsstromes verläuft.

35. Reaktionskammer nach einem der Ansprüche 26 bis 34, gekennzeichnet durch Mittel zur Einstellung der Frequenz und Amplitude eines Wechselstromes, der der Magnetmaterialschicht des Heizers zugeführt ist.

36. Reaktionskammer nach einem. der Ansprüche 26 bis 35, gekennzeichnet durch eine Vorreaktionszone stromaufwärts von der Reaktionszone, wobei eine poröse Schicht des Heizers innerhalb der Vorreaktionszone in dem Strömungspfad wenigstens eines flüssigen Reaktions mittels entlang der Reaktionszone angeordnet ist.

37. Reaktionskammer nach Anspruch 36, gekennzeichnet durch Mittel zur Einleitung von flüssigken Reaktionsmitteln in die poröse Heizerschicht innerhalb der Vorreaktionskammer an verschiedenen Orten entlang der Vorreaktionskammer, wobei die jedem Reaktions mittel auf dem Wege zu der Reaktionszone zugeführt Wärme abhängig ist von dem Ort, an dem es eingeleitet ist.

38. Reaktionskammer nach einem der Ansprüche 26 bis 37, dadurch gekennzeichnet, daß die Kammer eine Vorreaktionszone stromaufwärts von der Reaktionszone und eine Nachreaktionszone stromabwärts von der Reaktionszone aufweist, daß sich eine poröse Schicht des Heizers entlang der Vorreaktionszone erstreckt, daß sich eine poröse Schicht des Heizers entlang der Reaktionszone erstreckt, und daß sich eine poröse Schicht des Heizers entlang der Nachreaktionszone erstreckt, wodurch dem durch alle drei Zonen strömenden Fluidum Wärme in selbstregulierender Weise zugeführt ist, und daß Kühlmittel vorgesehen sind, um Wärme aus den Zonen in einer vorbestimmten Weise abzuleiten.

39. Reaktionskammer nach Anspruch 38, dadurch gekennzeichnet, daß Fluidumsströmungssteuereinrichtungen zur Steuerung der Strömungsgeschwindigkeiten in der Kammer vorgesehen sind, und daß die Abmessungen der Kammer so sind, daß der Druck und das Volumen der Fluidums in jeder Zone in einer vorgegebenen Weise kontrolliert sind.

**Revendications**

1. Générateur de chaleur à autorégulation de la température d'un fluide comprenant une seule ou plusieurs couches contiguës, la couche unique ou au moins une des couches contigues étant une couche conductrice de la chaleur de résistance électrique relativement élevée, mais néanmoins en un matériau magnétique conducteur du courant alternatif, dont la perméabilité est inversement liée à sa température dans un domaine de température donné et étant munie de bornes électriques pour la traversée d'un courant alternatif dans cette couche, la profondeur de pénétration de ce courant étant dépendante de sa perméabilité et en conséquence de sa température, caractérisé en ce qu'au moins cette couche conductrice de la chaleur d'un matériau magnétique, ou une couche qui lui est contigue est poreuse et adaptée à avoir au moins une partie du fluide à chauffer logée dans ses pores.

2. Générateur de chaleur selon la revendication 1, dans lequel les bornes électriques sont introduites dans cette couche de matériau magnétique, pratiquement à sa surface, grâce à quoi, quand on applique un courant alternatif d'amplitude constante à ces bornes, la profondeur de pénétration $d_1$ du courant à partir de cette surface dans ladite couche de matériau magnétique est définie par l'expression:

$$d_1 \alpha\ 1/\sqrt{\mu_1}$$

dans laquelle $\mu_1$ est la perméabilité magnétique de cette couche de matériau magnétique, et où la température et en conséquence la perméabilité de cette couche de matériau magnétique est influencée par la température du fluide dans ses pores avec une élévation de la température entrainant une augmentation en profondeur de la pénétration du courant dans ce matériau magnétique et en conséquence une diminution de l'effet Joule calorifique.

3. Générateur de chaleur selon la revendication 2, dans lequel où sous l'influence du fluide, la température et en conséquence la perméabilité de la couche de matériau magnétique varie de zone en zone de cette couche, la profondeur de pénétration du courant et en conséquence le chauffage par effet Joule varie aussi de zone en zone.

4. Générateur de chaleur selon la revendication 1 ou la revendication 2, comprenant une structure laminaire comportant (a) une première couche constituée par la couche de matériau magnétique à résistance élevée conductrice de la chaleur mentionnée ci-dessus, et (b) une seconde couche constituée d'un matériau à faible résistance électrique conductrice de la chaleur, au moins une de ces couches étant poreuse pour recevoir le fluide à chauffer, et l'interface entre cette première et cette seconde couche permettant entre elles une conduction électrique et thermique.

5. Générateur de chaleur selon les revendications 2 et 4, dans lequel cette surface de la couche de matériau magnétique à laquelle sont appliquées les bornes électriques est la surface opposée à l'interface, et quand la température dépasse un niveau prédéterminé, l'épaisseur de cette couche de matériau magnétique est totalement pénétrée par le courant de sorte que le flux de courant commence à pénétrer la seconde couche sur une profondeur $d_2$ selon la formule:

$$d_2 \alpha 1/\sqrt{\mu_2}$$

où $\mu_2$ est la perméabilité magnétique de la seconde couche le long du passage du courant.

6. Générateur de chaleur selon la revendication 5, dans lequel sous l'influence du fluide, la température de la structure laminaire varie de zone en zone, la profondeur de pénétration $d_1$ de la couche du matériau magnétique et la profondeur de pénétration $d_2$, si elle existe, ce cette seconde couche variant également de zone en zone, augmentant en fonction de la température et, de la même manière, l'effet Joule de chauffage variant de zone en zone.

7. Générateur de chaleur selon l'une quelconque des revendications précédentes, dans lequel la composition de la couche de matériau magnétique varie de zone en zone, cette couche ayant une perméabilité par rapport à la caractéristique de température qui varie de zone en zone.

8. Générateur de chaleur selon l'une quelconque des revendications précédentes, dans lequel l'effet Joule engendré en réponse à l'application de ce courant alternatif est suffisant pour élever la température d'au moins une petite quantité du fluide dans les pores et une zone de la couche de matériau magnétique qui leur est associée dans cette gamme de température où la perméabilité magnétique est inversement proportionnelle à sa température.

9. Générateur de chaleur selon l'une quelconque des revendications précédentes, dans lequel la couche poreuse agit comme un filtre pour filtrer les impuretés du fluide qui est forcé sous pression à travers la couche poreuse.

10. Générateur de chaleur selon la revendication 9, comprenant des moyens pour le chauffage sélectif de la couche poreuse à une température à laquelle les pores commencent à être dépourvus des impuretés filtrées.

11. Générateur de chaleur selon les revendications 5 et 9 ou 5 et 10, dans lequel à la fois la couche de matériau magnétique et la seconde couche sont poreuses, le fluide étant forcé sous pression à travers les deux, et les pores d'au moins la seconde couche étant suffisamment petits pour éliminer par filtration les impuretés dans le fluide.

12. Générateur de chaleur selon la revendication 10 ou les revendications 10 et 11, dans lequel ces moyens de chauffage sélectifs de la couche poreuse filtrant les impuretés comprennent une couche supplémentaire d'un matériau conducteur du courant alternatif dans une relation de transfert thermique avec cette couche poreuse et ayant une perméabilité magnétique telle que dans les mêmes conditions, sa résistance au taux de courant et en conséquence son effet Joule est plus grand que celui de la couche de matériau magnétique conducteur de la chaleur, avec des moyens pour amener sélectivement le courant alternatif à s'écouler dans cette couche supplémentaire, la température pour libérer les pores de la couche filtrant les impuretés filtrées étant obtenue.

13. Générateur de chaleur selon l'une des revendications précédentes, comportant une source de courant alternatif reliée par l'intermédiaire des bornes électriques et capable de fournir un courant d'une amplitude fixe et d'une fréquence constante.

14. Générateur de chaleur selon l'une des revendications précédentes, dans lequel la ou les couches entourent un axe pour former une structure tubulaire.

15. Générateur de chaleur selon les revendications 4 et 14, dans lequel la couche de matériau magnétique conducteur de la chaleur est entourée par cette seconde couche.

16. Générateur de chaleur selon les revendications 4 et 14, dans lequel cette seconde couche est poreuse et est entourée par la couche de matériau magnétique conducteur de la chaleur qui n'est pas poreuse.

17. Générateur de chaleur selon la revendication 16, comprenant en outre une troisième couche non poreuse qui est entourée par cette deuxième couche de telle sorte que la couche poreuse soit prise en sandwich entre les couches non poreuses, cette troisième couche étant constituée d'un matériau magnétique, conduisant le courant alternatif d'une résistance électrique comparativement élevée, avec une perméabilité magnétique qui varie en fonction inverse de la température, dans une fourchette caractéristique et étant munie de bornes électriques pour le passage du courant alternatif à travers elle à sa surface intérieure.

18. Générateur de chaleur selon l'une des revendications 1 à 13, dans lequel à température constante et amplitude de courant constante, la résistance de la couche de matériau magnétique et, en conséquence, le chauffage par effet Joule varie le long du parcours du courant.

19. Générateur de chaleur selon la revendication 18, dans lequel la couche de matériau magnétique va en diminuant le long du parcours du courant.

20. Générateur de chaleur selon la revendication 19, dans lequel la couche de matériau magnétique est une couche poreuse de forme conique creuse et dans lequel le fluide s'écoule dans une direction pratiquement alignée sur l'axe du cône.

21. Générateur de chaleur selon la revendication 20, dans lequel les bornes électriques de la couche de matériau magnétique sont logées au sommet et à la périphérie de la base du cône.

22. Générateur de chaleur selon les revendications 4 et 21, dans lequel la deuxième couche est aussie une couche poreuse de forme conique creuse qui est contigue et coaxiale à la couche de matériau magnétique.

23. Générateur de chaleur selon la revendication 22, dans lequel la deuxième couche entoure extérieurement la couche de matériau magnétique.

24. Générateur de chaleur selon l'une quelconque des revendications 1 à 13, dans lequel la couche de matériau magnétique conducteur de la chaleur est l'une d'une pluralité de telles couches telles, qu'elles aient toutes la même perméabilité magnétique par rapport à la caractéristique de température, toutes étant poreuses et étant placées sur une pile dans laquelle les couches sont contigües et de ce fait en contact électrique.

25. Enceinte de réaction chimique comportant au moins en elle un réactif fluide et étant munie d'un générateur de chaleur électrique à autorégulation selon l'une quelconque des revendications précédentes pour le chauffage de ce fluide et régulant la température de ce dernier au niveau désiré.

26. Enceinte de réaction selon la revendication 25, comportant une zone de réaction dans laquelle se produit une réaction à une température au dessus de laquelle au moins un réactif fluide pénêtre dans l'enceinte, et où la générateur de chaleur à autorégulation est disposé pour provoquer l'établissement de cette température de réaction.

27. Enceinte de réaction selon la revendication 26, dans laquelle plusieurs réactifs fluides pénêtrent dans la zone réactionnelle et donnent un produit fluide, et où le générateur de chaleur est placé le long de la zone réactionnelle de sorte que les réactifs et le produit fluide obtenu s'écoulent à travers et provoque l'obtention d'une température désirée par le transfert auto-régulé de chaleur.

28. Enceinte de réaction selon la revendication 26 ou la revendication 27, dans laquelle le générateur de chaleur est disposée également pour recevoir au moins un produit fluide venant de la décharge de la zone réactionnelle pour provoquer l'obtention d'une température désirée de la part du produit fluide.

29. Enceinte de réaction selon l'une quelconque des revendications 26 à 28, comportant en outre un moyen de refroidissement pour l'extraction de la chaleur à partir du fluide dans l'enceinte.

30. Enceinte de réaction selon la revendication 29, dans laquelle le générateur de chaleur et le moyen de refroidissement transfèrent respectivement de la chaleur et en retire du fluide au même endroit et dans le même temps.

31. Enceinte de réaction selon la revendication 30, dans laquelle en plus de cet emplacement où se produisent le chauffage et le refroidissement, il y a un autre emplacement auquel seul le chauffage à autorégulation intervient.

32. Enceinte de réaction selon l'une quelconque des revendications 26 à 31, dans laquelle la zone réactionnelle contient un catalyseur.

33. Enceinte de réaction selon l'une quelconque des revendications 26 à 32, dans laquelle on applique un champ magnétique pour faire varier la perméabilité magnétique par rapport à la caractéristique de température de la couche de matériau magnétique du générateur de chaleur.

34. Enceinte de réaction selon l'une quelconque des revendications 26 à 33, dans laquelle au moins une partie du parcours du courant alternatif à travers la couche de matériau magnétique du générateur de chauffage est transversale par rapport à la direction de l'écoulement du fluide.

35. Enceinte de réaction selon l'une quelconque des revendications 26 à 34, comportant en outre des moyens d'ajustement de la fréquence et de l'amplitude du courant alternatif arrivant à la couche de matériau magnétique du générateur de chaleur.

36. Enceinte de réaction selon l'une quelconque des revendications 26 à 35, possédant une zone de préréaction en amont de la zone réactionnelle, une couche poreuse du générateur de chaleur étant placée à l'intérieur de la zone de pré-réaction sur le parcours de l'écoulement d'au moins un réactif liquide se dirigeant vers la zone réactionnelle.

37. Enceinte de réaction selon l'une quelconque des revendications 26 à 36, comportant en outre des moyens d'introduction des réactifs fluides dans la couche poreuse du générateur de chaleur à l'intérieur de la zone de pré-réaction en différents points le long de cette zone de pré-réaction, la chaleur apportée à chaque réactif se dirigeant vers la zone réactionnelle dépendant du point auquel il est introduit.

38. Enceinte de réaction selon l'une quelconque des revendications 26 à 37, dans laquelle l'enceinte possède une zone de pré-réaction en amont de la zone réactionnelle et une zone de post-réaction en aval de la zone réactionnelle, une couche poreuse du générateur de chaleur s'étend le long de la zone réactionnelle et une couche poreuse du générateur de chaleur s'étend le long de la zone de post-réaction, grâce à quoi on applique de la chaleur au fluide circulant à travers ces trois zones d'une façon auto-régulée, et des moyens de refroidissement sont également prévus pour l'extraction de chaleur à partir des zones, d'une manière prédéterminée.

39. Enceinte de réaction selon la revendication 38, dans laquelle on prévoit des moyens de régulation de la circulation des fluides pour réguler le débit dans l'enceinte, et où les dimensions de l'enceinte sont concues de telle façon que la pression et le volume des fluides dans chaque zone soient régulés d'une manière déterminée.

**EP 0 151 131 B1**

Fig. I

Fig. IIa

Fig. IIb

HEAT GENERATED

DEPTH OF CURRENT

Fig. III

CONDUCTOR
INSULATOR
MAGNETIC
LOW RESISTANCE
MAGNETIC
INSULATOR
CONDUCTOR

Fig. IV

1

Fig. V

Fig. VI

Fig. VII

Fig. VIII

Fig. IX

Fig. X

Fig. XI

Fig. XII

3